(19) Europäisches Patentamt
European Patent Office
Office européen des brevets

(11) **EP 2 658 212 A1**

(12) **EUROPEAN PATENT APPLICATION**

(43) Date of publication:
**30.10.2013 Bulletin 2013/44**

(51) Int Cl.:
**H04L 29/08** *(2006.01)*

(21) Application number: **12165697.9**

(22) Date of filing: **26.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Uniqoteq Oy**
**20540 Turku (FI)**

(72) Inventor: **Hakunti, Jussi**
**20540 Turku (FI)**

(74) Representative: **Papula Oy**
**P.O. Box 981**
**00101 Helsinki (FI)**

(54) **An apparatus and a method for automatic rating of content in a network node**

(57) The invention relates to a method and apparatus. In the method a network node obtains a first content presentation comprising text portions from a network server. The sizes of the text portions are summed to yield a total size of the text portions. The presenting of the first content presentation is started on a user interface of the network node. Via the user interface is detected a request to stop the presenting of the first content presentation. The time elapsed between the starting of the presenting and the detecting of the request to stop the presenting is determined. It is determined whether the time elapsed exceeds a threshold value proportional to the calculated total size of the text portions. A positive relevancy rating signal associated with an identifier of the first content presentation is transmitted from the network node to the network server, in response to the exceeding of the threshold value.

FIG. 2

Printed by Jouve, 75001 PARIS (FR)

**Description**

**BACKGROUND OF THE INVENTION**

Field of the invention:

The invention relates to the rating of content provided to network nodes, content consumption in network nodes, and an apparatus and a method for automatic rating of content in a network node.

Description of the Related Art:

The rating of content in Internet is important for search engines and portals that strive to provide links to content that is most interesting for the user community. A specific area that benefits from content ratings are push type of services where content is actually provided to a client node over the network without an explicit request from the user via the user interface of the client node. It is useful if the user is not pushed arbitrary content without consulting the user's preferences or having an idea of the value of the content in the eyes of the user community. The pushing of content of no interest for users consumes network resources. This is of pronounced importance content is pushed to a wireless client node. The user community may comprise the users of the global Internet or a more limited user community, for example, the users of a given portal or a given service. The problem in the obtaining of content ratings from users lies in that the users must be explicitly prompted for an opinion. The providing of the opinion often requires also registration and logging on to a portal or a service providing the content. Only a fraction of the users explicitly log-on in order to provide the rating. In the case of content on rather neutral topics or in the case of contents having a small audience it may be difficult to obtain enough user ratings or even a single user rating. Therefore, it would be beneficial to be able to determine user interest automatically relating to a given content presentation.

**SUMMARY OF THE INVENTION:**

According to an aspect of the invention, the invention is a method, comprising: obtaining at a network node a first content presentation comprising at least one text portion from a network server; summing the length of the at least one text portion to calculate a total length of the at least one text portion; starting presenting of the first content presentation on a user interface of the network node; detecting via the user interface a request to stop the presenting of the first content presentation; determining the time elapsed between the starting of the presenting and the detecting of the request to stop the presenting; determining whether the time elapsed exceeds a threshold value proportional to the calculated total length of the at least one text portion; and transmitting, from the network node, a positive relevancy rating signal associated with an identifier of the first content presentation in response to the exceeding of the threshold value to the network server.

According to a further aspect of the invention, the invention is an apparatus comprising at least one processor and at least one memory including computer program code, the at least one memory and the computer program code configured to, with the at least one processor, cause the apparatus at least to perform: obtaining at the apparatus a first content presentation comprising at least one text portion from a network server; summing the length of the at least one text portion to calculate a total length of the at least one text portion; starting presenting of the first content presentation on a user interface of the apparatus; detecting via the user interface a request to stop the presenting of the first content presentation; determining the time elapsed between the starting of the presenting and the detecting of the request to stop the presenting; determining whether the time elapsed exceeds a threshold value proportional to the calculated total length of the at least one text portion; and transmitting, from the apparatus, a positive relevancy rating signal associated with an identifier of the first content presentation in response to the exceeding of the threshold value to the network server.

According to a further aspect of the invention, the invention is a network node comprising the apparatus.

According to a further aspect of the invention, the invention is an apparatus comprising: means for obtaining at the apparatus a first content presentation comprising at least one text portion from a network server; means for summing the length of the at least one text portion to calculate a total length of the at least one text portion; means for starting presenting of the first content presentation on a user interface of the apparatus; means for detecting via the user interface a request to stop the presenting of the first content presentation; means for determining the time elapsed between the starting of the presenting and the detecting of the request to stop the presenting; means for determining whether the time elapsed exceeds a threshold value proportional to the calculated total length of the at least one text portion; and means for transmitting, from the apparatus, a positive relevancy rating signal associated with an identifier of the first content presentation in response to the exceeding of the threshold value to the network server.

According to a further aspect of the invention, the invention is a network node comprising the apparatus.

According to a further aspect of the invention, the invention is a computer program comprising code adapted to cause the following when executed on a data-processing system: obtaining at a network node a first content presentation comprising at least one text portion from a network server; summing the length of the at least one text portion to calculate a total length of the at least one text portion; starting presenting of the first content presentation on a user interface of the network node; detecting via the user interface a request to stop the presenting of the first content presentation; determining the time elapsed between the starting of the presenting and the detecting of the request to stop the presenting; determining whether the time elapsed exceeds a threshold value proportional to the calculated total length of the at least one text portion; and transmitting, from the network node, a positive relevancy rating signal associated with an identifier of the first content presentation in response to the exceeding of the threshold value to the network server.

According to a further aspect of the invention, the invention is a computer program product comprising the computer program.

According to a further aspect of the invention, the invention is a system comprising: a network node configured to obtain a first content presentation comprising at least one text portion from a network server, to sum the length of the at least one text portion to calculate a total length of the at least one text portion, to start presenting of the first content presentation on a user interface, to detect via the user interface a request to stop the presenting of the first content presentation, to determine the time elapsed between the starting of the presenting and the detecting of the request to stop the presenting, to determine whether the time elapsed exceeds a threshold value proportional to the calculated total length of the at least one text portion, and to transmitting a positive relevancy rating signal associated with an identifier of the first content presentation in response to the exceeding of the threshold value to the network server; and the network server configured to transmit the first content presentation to the network node and to receive the positive relevancy rating signal associated with an identifier of the first content presentation.

In one embodiment of the invention, at least one of the method steps presented above may be executed or performed in the order in which they are written hereinbefore in association with the description of the aspects of the invention.

In one embodiment of the invention, the first content presentation comprises a hypertext mark-up language document. The hypertext mark-up language may be the eXtensible Hypertext Markup Language (XHTML) or the HyperText Markup Language (HTML). The hypertext mark-up language document may comprise the at least one text portion. The hypertext mark-up language document may comprise at least one link to an image, a video, an animation or an application. The at least one link may be a Uniform Resource Locator (URL) or a Uniform Resource Identifier (URI). The at least one link to an image, a video, an animation or an application are used by the network node to obtain the linked image, video, animation or application to be presented on the user interface of the network node as parts of the content presentation. The hypertext markup language document may comprise at least one script language part. The script language may be, for example, JAVASCRIPTTM.

In one embodiment of the invention, the detection of the request to stop presenting of the first content presentation is in response to detecting via the user interface a request to present a third content presentation or a second content presentation on the user interface of the network node. By the second or third content presentation may be meant any other content presentation than the first content presentation. This may mean that the user of the network node opens the third or the second content presentation or selects an already open content presentation to be displayed on top of the first content presentation so that the first content presentation is at least partly covered. The second or third content presentation may be presented in the same area, for example, a window, on the user interface that is used to display the first content presentation. The second or third content presentation may at least partly cover the area of the first content presentation on the user interface. The second content presentation or the third content presentation may be received to the network node before or after the receiving of the first content presentation.

In one embodiment of the invention, the user interface comprises a graphical user interface and a pointer device for moving a pointer displayed on the graphical user interface.

In one embodiment of the invention, the detecting of the request via the user interface to stop the presenting of the first content presentation comprises detecting in the network node that the user selects using a pointer device an area on the user interface representative of closing the first content presentation. The area may comprise a displayed closing symbol such as "X". Alternatively, the network node may detect that the users presses a key or a button on a pointer device or on a keyboard or on a keypad which is interpreted by the network node as a closing request to close the first content presentation.

In one embodiment of the invention, for example, if the length of a first text portion is $N_1$, for example, in words, and the length of a second text portion is $N_2$, for example, in words, the total length N of the first and second text portions is $N = N_1 + N_2$, wherein $N_1$ and $N_2$ are arbitrary non-negative integers. Instead of words an arbitrary text length, that is, text size unit may be used such as characters or sentences or paragraphs.

In one embodiment of the invention, the summing the length of the at least one text portion to yield a total length of the at least one text portion comprises computing $S = \sum_{n=1}^{N} S_n$, where N is the number of the text portions and

$N \geq 1$, $S_n$ is the length of the text portion n in terms of a text length unit and $N \geq n \geq 1$, and S is the total length of the at least one text portion in terms of the same text length unit.

In one embodiment of the invention, the length of the at least one text portion may be referred to as the size of the at least one text portion. Similarly, the total length may be referred to as the total size. Similarly a text length unit may also be referred to as a text size unit.

In one embodiment of the invention, a text portion comprises, for example, at least one of a column, a paragraph, a frame, an element, a window and a chapter, for example, in a hypertext markup language document, for example, an HTML document or an XHTML document.

In one embodiment of the invention, a first text portion and a second text portion among the at least one text portion may be comprised in different files obtained from the network server to the network node.

In one embodiment of the invention, the length of the at least one text portion and the total length are determined in terms of at least one of the number of words, the number of sentences, the number of characters, the number of bytes, the number of bits and the number of paragraphs. The total length computed may be multiplied by a predefined percentage and a reading time for one text length unit to calculate the threshold value, that is, $T = T_w * N * P/100$, where in the predefined percentage is P, N is the total length, $T_W$ is the reading time for one text length unit, for example, a word and T is the threshold value. The predefined percentage may be, for example, between 15% - 100%. The predefined percentage may be empirically determined to represent the amount of text that an average person reads from a newspaper article or another type of news article or similar subject matter. The predefined percentage may be constant. The text length unit may be, for example, sentence, word, character, byte, bit or paragraph. The reading time for one text length unit is predefined and represents the statistical average reading time of an average person. The reading time may be determined for a larger text corpus and divided by the text length unit chosen for the purposes of the invention.

In one embodiment of the invention, the percentage is set to 100% if the total length of the at least one text portion does not exceed a predefined minimum such as, for example, 20 words or 100 characters.

In one embodiment of the invention, the method further comprises storing, in the network server, a content presentation database; storing the first content presentation in the content presentation database; receiving from the network node a request for at least two content presentations; and transmitting the first content presentation to the network node in response to the request.

In one embodiment of the invention, the method further comprises receiving the first content presentation to the network server from a content owner node.

In one embodiment of the invention, the method further comprises transmitting, from the network node, a request comprising an identifier of the first content presentation to the network server.

In one embodiment of the invention, the method further comprises reserving on the user interface an area for at least two visual symbols, each symbol being representative of a linked content presentation; and presenting a visual symbol representative of the first content presentation in the area; and detecting a selection of the visual symbol representative of the first content presentation via the user interface of the network node.

In one embodiment of the invention, the method further comprises storing a second content presentation in the content presentation database; in response to the receiving of the positive relevancy rating signal, determining in the content presentation database that the second content presentation has a document similarity metric best matching the first content presentation, the document similarity metric being computed for the at least one text portion of the first content presentation and the at least one text portion of the second content presentation; and transmitting the second content presentation to the network node.

In one embodiment of the invention, the method further comprises receiving a second content presentation at the network node; and presenting a visual symbol representative of the second content presentation in the area.

In one embodiment of the invention, the document similarity metric is computed using the vector space model for text documents.

In one embodiment of the invention, the method further comprises transmitting a negative relevancy rating signal from the network node to the network server in response to detection that the threshold value is not exceeded.

In one embodiment of the invention, the method further comprises receiving a predefined number of negative relevancy rating signals associated with the first content presentation to the network server; and removing the first content presentation from the content presentation database. A negative relevancy rating signal may be transmitted from the network node to the network server in response to detection that the threshold value is not exceeded. This may occur, for example, if the network node detects via the user interface a request to stop presenting the content presentation very soon, for example, within seconds after the presenting of the content presentation.

In one embodiment of the invention, the method further comprises receiving a predefined number of negative relevancy rating signals associated with the first content presentation to the network server; and updating the first content presentation in the content presentation database with an attribute that indicates that the content presentation is no longer to be pushed or advertised to at least one network node. The first content presentation may also be removed from a list of content presentations advertised to at least one network node, the at least one network node may comprise the network node from which the negative relevancy rating signal is received.

In one embodiment of the invention, the method further comprises receiving a predefined number of negative relevancy rating signals associated with the first content presentation to the network server; and removing the first content presentation in the network server from a list of content presentations advertised to at least one network node, the at least one network node may comprise the network node from which the negative relevancy rating signal is received.

In one embodiment of the invention, the first content presentation or the second content presentation comprises at least one of a text document content item, a hypertext content item, a picture content item, a computer graphics animation content item and a video content item.

In one embodiment of the invention, the identifier of the first content presentation comprises at least one of a uniform resource locator, a uniform resource identifier or an object identifier.

In one embodiment of the invention, the network node comprises a wireless network node.

In one embodiment of the invention, the network node is communicatively connected to a television to present the user interface of the network node.

In one embodiment of the invention, the network node comprises a television.

In one embodiment of the invention, the network node is at least one of a mobile node, a wireless mobile node, a terminal device, a mobile terminal, a cellular terminal, a laptop computer, a desktop computer and a server computer.

In one embodiment of the invention, the obtaining of the content presentation comprises receiving, at the network node at least one transmission, the at least one transmission comprising at least one content item. The at least one transmission may be received from the network server, that is, a server storing the at least one content item.

In one embodiment of the invention, the obtaining of a content presentation comprises retrieving from the network server at least one content item that is comprised in the content presentation. By a content item being comprised in a content presentation may be meant that there is a link to the content item in the content presentation to the content item, for example, from another content item comprised in the content presentation. The mentioned another content item may be, for example, a hypertext document, a HTML document, an XHTML document, a content presentation structure file or a controlling content item that may govern the placing and the timing of the presentation of other content items comprised in the content presentation.

In one embodiment of the invention, a content presentation comprises at least one content item. A content item may comprise at least one of a content presentation structure file, a hypertext document, a structured document, an image file, a photographic file, a video file, a computer graphics animation file, a computer game, a video file comprising metadata, an image file comprising metadata, a metadata document for a multimedia presentation, and a multimedia presentation timing and presentation template file, a Synchronized Multimedia Integration Language (SMIL) file or document or document fragment. The at least one text portion may be comprised in a content item.

In one embodiment of the invention, the network node is a mobile node. In one embodiment of the invention, the mobile node comprises at least one of a handset, a cellular phone, a personal digital assistant, a cellular browser node, a chipset, a mobile device, a wireless mobile node, a wireless content browser node and a mobile terminal.

In one embodiment of the invention, the network node comprises a Long-Term Evolution (LTE) User Equipment.

In one embodiment of the invention, the content presentation further comprises a structured document.

In one embodiment of the invention, the structured document comprises syntax from at least one of a hypertext markup language, extensible hypertext markup language and extensible markup language.

In one embodiment of the invention, the network node comprises a wireless mobile node and wherein the user interface is presented on an external display communicatively connected to the wireless mobile node.

In one embodiment of the invention, the at least one processor of the apparatus, for example, of a wireless mobile node may be configured to perform any of the method steps disclosed hereinabove.

In one embodiment of the invention, the at least one processor of the apparatus, for example, of a content package server or any server may be configured to perform any of the method steps disclosed hereinabove. The server may be a content package server or an origin server.

In one embodiment of the invention, the transmission and reception steps may be performed by at least one radio frequency circuit.

In one embodiment of the invention, the mobile node such as a User Equipment (UE) comprises a mobile station or generally a mobile terminal. In one embodiment of the invention a user of a mobile terminal is identified using a subscriber module, for example, User Services Identity Module (USIM) or a Subscriber Identity Module (SIM). The combination of Mobile Equipment (ME) and a subscriber module may be referred to as a mobile subscriber. A mobile subscriber may be identified using an IMSI. An IP address may be allocated or associated with a mobile subscriber.

In one embodiment of the invention, the apparatus is a mobile terminal, for example a, mobile handset.

In one embodiment of the invention, the apparatus is a semiconductor circuit, a chip or a chipset.

In one embodiment of the invention, the computer program or the computer program product is stored on a computer readable medium. The computer readable medium may be, but is not limited to, a removable memory card, a removable memory module, a magnetic disk, an optical disk, a holographic memory or a magnetic tape. A removable memory module may be, for example, a USB memory stick, a PCMCIA card or a smart memory card.

In one embodiment of the invention, at least one of the method steps presented above in association with embodiments comprising multiple steps or phases may be executed or performed in the order in which they are written hereinbefore within the respective embodiment.

The embodiments of the invention described hereinbefore may be used in any combination with each other. Several of the embodiments may be combined together to form a further embodiment of the invention. A method, an apparatus, a computer program or a computer program product to which the invention is related may comprise at least one of the embodiments of the invention described hereinbefore.

It is to be understood that any of the above embodiments or modifications can be applied singly or in combination to the respective aspects to which they refer, unless they are explicitly stated as excluding alternatives.

The benefits of the invention are related to the reduced use of network resources by way of avoiding the receiving of content presentations to network nodes that are not relevant for the information needs of the users of the network nodes. The users are no longer required to manually indicate the relevance of content presentations via explicit enquiries presented to the user. Use of the network nodes for content consumption is thus made easier for the users.

**BRIEF DESCRIPTION OF THE DRAWINGS:**

The accompanying drawings, which are included to provide a further understanding of the invention and constitute a part of this specification, illustrate embodiments of the invention and together with the description help to explain the principles of the invention. In the drawings:

**Fig. 1** illustrates a network node communicating with a network server to provide automatically rating related to a content presentation, in one embodiment of the invention;

**Fig. 2** illustrates the use of a user interface for automatically rating content presentations in one embodiment of the invention;

**Fig. 3** is a flow chart illustrating a method for automatic rating of content in a network node in one embodiment of the invention; and

**Fig. 4** illustrates an apparatus in one embodiment of the invention.

**DETAILED DESCRIPTION OF THE EMBODIMENTS:**

Reference will now be made in detail to the embodiments of the present invention, examples of which are illustrated in the accompanying drawings.

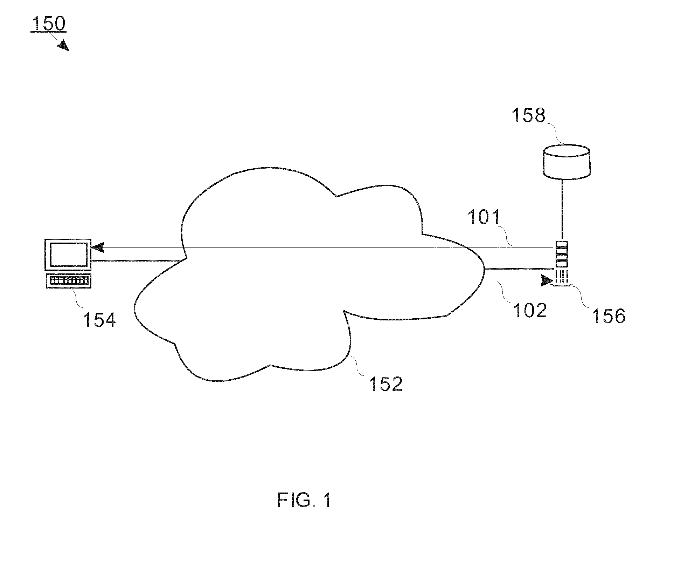

Figure 1 illustrates a network node communicating with a network server to provide automatically rating related to a content presentation, in one embodiment of the invention.

In Figure 1 there is illustrated a communication system 150 comprising a network 152 and a network node 154 which is communicatively connected to a network server 156 over network 152.

The starting point in Figure 1 is that network node 154 obtains a content presentation from network server 156, as illustrated with arrow 101. In one embodiment of the invention, the content presentation is sent to network node 154 in response to an earlier request from network node 154 to network server 156. The request may pertain to the content presentation. In one embodiment of the invention, the content presentation is sent from network server 156 without an explicit request for the content presentation from network node 154. A content presentation may comprise a first content item which is at least one of a web page, a hypertext page, an electronic book, an electronic booklet or a text document. The first content item comprises at least one text portion of human readable natural language. The content presentation may also comprise a second content item, for example, at least one of an image, a graphical diagram, a video, an animated image, an audio, a computer graphics animation or a computer game. The content presentation may be, for example, a web page comprising at least one text portion and a number of still or animation images.

Network node 154 renders the content presentation on the user interface. In other words, the content presentation is presented on the user interface for the user. In response to the completion of the rendering, network node 154 starts a timer measuring the time elapsed since the rendering. Thereupon, the user may start reading or studying the content presentation. When the user closes the presentation via the user interface of network node 154, network node 154 stops the timer. The closing may be performed by clicking a graphical user interface gadget or button on a window presenting the content presentation.

Network node 154 also counts the number of words N in the at least one text portion comprised in the content presentation, wherein N is a non-zero positive integer. For example, if the length of a first text portion is $N_1$ and the length of a second text portion is $N_2$ the total length of the first and second text portions is $N = N_1 + N_2$. Instead the number of words, the number of at least one of characters, sentences, paragraphs, bytes or bits in the at least one text portion may be counted. The number of words N is used to compute a threshold value for a reading time for the content presentation, which is indicative of the user reading at least a predefined percentage of the at least one text portion. The percentage may be, for example, between 10% and 75%. In one embodiment of the invention, the percentage may also be 100%. There may be defined a time $T_w$ which is the average reading time for a single word for an average human reader. In one embodiment of the invention, the time $T_w$ is determined by first determining the language of each of the at least one text portion. The at least one text portion may be also written in different languages. In one embodiment of the invention, for the computation of the threshold value is considered only those text portions of the at least one text portion that are comprised on the first page or the main page of the content presentation or visible on the user interface without further user interaction via the user interface such as scrolling or selecting a next page.

The number of words N is used to compute the threshold value $T = T_w * N * P/100$, wherein the P is the percentage of the at least one text portion in the first content item, the reading of which is considered to indicate an interest in the first content item. If the timer indicates a time larger than the threshold value T, network node 154 determines a positive rating on behalf of the user.

In one embodiment of the invention, the user interface of network node 154 provides a button, a selector, a menu or any graphical user interface gadget by clicking of which the user may override the automatic positive rating determined based on the reading time. This may be performed, for example, if the first content item is, for example, an article that actually does not please the user despite the fact that the user reads the first content item longer than the computed threshold value. The article may be on a topic on which the user does not want to read further articles.

In response to the determination of the positive rating or a negative rating, for example, due to the reading time not exceeding the threshold value T, the rating is sent from network node 154 to network server 156, as illustrated with arrow 102. The rating may be sent in a message together with an identifier of the content presentation such as a Uniform Resource Identifier (URI) or a Uniform Resource Locator (URL).

Network server 156 may store a content presentation database 158, which is used to store a plurality of content presentations. Network server 156 may increment counters for positive and negative ratings for the content presentation based on the rating received from network node 154. Network server 156 may use a negative rating to determine what content presentations to present to the user of network node 154. Network server 156 may associate a threshold number of negative ratings for a given content presentation. If the threshold number of negative ratings for the content presentations is exceeded, network server 156 may remove the content presentation from a list of content presentations that are offered for downloading to network nodes. Network server 156 may also remove the content presentation from content presentation database 158. The list of content presentations may be transmitted to network node 154 separately or in association with other content presentations transmitted to network node 154.

In one embodiment of the invention, if the threshold number of negative ratings for the content presentations is exceeded, network server 156 may remove the content presentation from a list of content presentations that are pushed to end-user network nodes such as network node 154. The content presentation may also be removed from content presentation database 158.

In one embodiment of the invention, network node 154 is a wireless network node. Network node 154 may also be a television browser node. Network node node 154 may be connected via a connection to an external display, for example, a conventional digital or analog television. The television may be, for example, a plasma television, an LCD television or a projector projecting an image on a screen or vapor. The connection may comprise at least one of a wired and a wireless connection and may comprise, for example, at least one of a Universal Serial Bus (USB) interface, a High Definition Multimedia Interface (HDMI), and an analog television antenna connector and a SCART Interface (Syndicat des Constructeurs d'Appareils Radioré-cepteurs et Téléviseurs). Network node 154 may be controlled using a remote control unit (not shown). Network node 154 may also be a cellular phone, a cellular terminal, a cellular modem, a mobile terminal, a mobile phone, a personal digital assistant, a handset or a browser node. The remote control unit may comprise a keypad for controlling the television directly and the remote control unit may comprise a keypad for controlling network node 154. The keypad for network node 154 may be a separate keypad. The separate keypad may be placed underneath the remote control unit. The keypads for television and wireless mobile node may be placed on opposite sides or one of these keypads may be hidden behind a sliding cover or any cover. The communication between network node 154 and remote control unit occurs, for example, over at least one of an Infrared (IR) connection, a Radio Frequency (RF) connection or a microwave frequency connection.

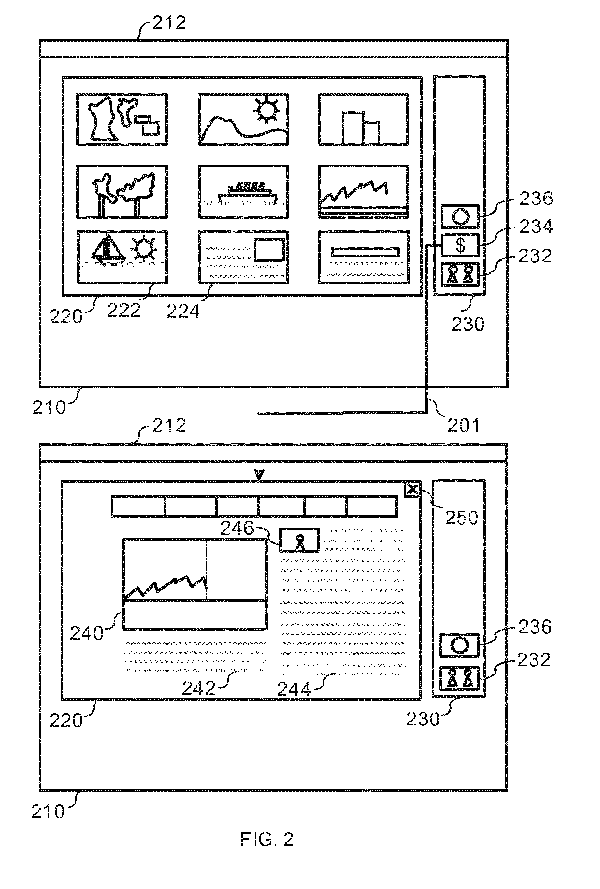

Figure 2 illustrates the use of a user interface for automatically rating content presentations in one embodiment of the invention.

In Figure 2 there is illustrated a graphical user interface 210, in short, a user interface 210. User interface 210 may be used in a network node such as network node 154 in Figure 1. User interface 210 comprises a control menu 212, which may be a browser control menu comprising commands for backward and forward navigation, selection of a predefined homepage, managing of bookmarks or favorites and other commands. User interface 210 also comprises a main window 220. Main window 220 is used to present a number of content presentations that have already been downloaded to the network node. The content presentations in main window 220 may have been selected explicitly by the user of the network node or based on at least one search term entered by the user of the network node via the user interface. In Figure 2 there is a content presentation 222, which may comprise a video content item. In Figure 2 there is also a content item 224 which may comprise an image and text. The content presentations in main window 220 represent different content formats. By the side of the main window there is a link area 230. The link area 230 comprises links 232, 234 and 236. Links 232 - 236 have been categorized beforehand in different interest categories based on the content presentation that they link to. The categorization may be performed in a network server such as network server 156 in Figure 1 that provides the links to the network node. The categorization is illustrated on the links 232 - 236 by way of simplified graphical symbols or icons on the links. The content presentations linked to with links 232 - 236 may be already downloaded to the network node before links 232 - 236 are presented on user interface 210. This means that links 232 - 236 refer to the network node locally. A content presentation linked to with any of links 232 - 236 may also be downloaded to the network node only after the user clicks or selects the link for the content presentation. Link 232 has a graphical symbol, which indicates that it is associated with people, comprising, for example, topics such as celebrities, movie stars or gossips. Link 234 has a graphical symbol, which indicates that it is associated with business or economics. Link 236 has a graphical symbol, which indicated that is associated with sports.

In Figure 2 it is assumed that the user of the network node selects link 234 by way of selecting it using a pointer device associated with the network node or by way of pressing at least one button on a keyboard or keypad associated with the network node. The keypad or keyboard may be comprised in a remote control unit or device. The selection of link 234 and the presentation of the content presentation referred to with link 234 is illustrated with arrow 201. In response to the selection, the content presentation pointed to with link 234 is presented on the main window 220. The content presentation selected comprises an image file 240 illustrating, for example, the value of a stock exchange index or share in a time span. The content presentation comprises a first text portion 242 and a second text portion 244. There is also a second image file 246, illustrating, for example, the picture of a commentator. Within main window 220 there is illustrated an area 250, the selection of which via the user interface causes the content presentation associated with link 234 to be closed. When the content presentation is closed the time elapsed while the content presentation has been visible on user interface 210 is measured by the network node. If the time elapsed exceeds a predefined threshold value, a positive rating is automatically determined by the network node for the content presentation. A feedback signal comprising the positive rating is sent to a network server together with an identifier of the content presentation. The identifier may be a Uniform Resource Identifier (URI) or a Uniform Resource Locator (URL). After the selection of link 234 by the user of the network node, in link area 230 are shown the remaining links 232 and 236.

Depending on the rating determined for the content presentation linked to with link 234, the network node may receive at least one new link, the content of which is related to the content presentation. The relation may be based on words used in the content presentation or a category of the content presentation. The words used may comprise keywords or index terms. Thereupon, the at least one new link is presented in the link area 230 above the remaining links 232 and 236.

In one embodiment of the invention, after the selection of link 234 and in response to the automatically or manually determined positive rating of the content presentation referred to with link 234, the content presentations referred to with the at least one new link are similar to the content presentation referred to with link 234. A network server providing the at least one new link determines content presentations that are similar to the content presentation referred to with link 234. The similarity determination may be based on a document similarity metric. The similarity metric must exceed a predefined threshold value or at least one new content presentation with the best similarity metric is selected. A number of new content presentations with best similarity metrics may be selected. The text portions in a given content presentation may be seen as a single text document. Thus, a similarity metric between two content presentations is the similarity metric between the text documents formed using the content presentations.

In one embodiment of the invention, the document similarity metric between two documents is based on that the number of similar words in the two documents. The number of similar words must exceed a predefined threshold value.

In one embodiment of the invention, the document similarity metric is based on the vector space model for text documents. The text portions in a content presentation are put together, that is, concatenated to form a single text document that represents the content presentation. In the vector space model text documents are represented as vectors $R = \{r_1, \cdots, r_k\}$, where the dimensionality k of the vectors represents the number of index terms used for document similarity determination or for document indexing. The index terms of a document may be the terms in the document from which most common words, that is, the so called stop words are removed. From the index terms may also be removed words that occur only once in a document. In the vector space model the vector elements m, wherein $1 <= m <= k$, are real valued weights that have been calculated for the index terms. The index term weights can be calculated using several formulas, in which the weights relate to the within- document frequencies of the index terms. In the case of *tf·idf* weighting the weight is proportional to the within- document frequency (tf, term frequency) and simultaneously inversely proportional to the frequency of the index term within the whole document database (idf, inverse document frequency). The whole document database may be the network server providing the at least one new link. The weighting is expressed using the formulas below

$$ntf_{ij} = \frac{tf_{ij}}{\max\_ tf_j} \qquad\qquad nidf_i = \frac{\log\left(\frac{|D|}{f_i}\right)}{\log(|D|)}$$

$w_{ij} = ntf_{ij} \cdot nidf_j$, wherein i means a certain index term, j a certain document, $tf_{ij}$ the frequency of occurrence of index term i within document j, $\max\_ tf_j$ the most frequent index term within document j, $f_i$ the frequency of occurrence of index term i in the whole document collection D and $|D|$ the size of the document collection, usually the number of documents in the collection, and $w_{ij}$ the weight of index term i in document j. The collection may be a number of different content presentations stored in a server. In one embodiment of the invention, $f_i$ just represents the number of documents containing the index term i. The actual frequencies may not be summed. The aim of this weighting is to reduce the effect of widely used terms that have less resolving power. The content presentations are represented as vectors, such that the non-zero vector elements represent the terms in a document formed from text portions in a content presentation. The content presentation linked to with link 234 may be used as a sample content presentation, from which a sample document is formed. The sample document is used to obtain links to similar documents, that is, similar content presentation text portions. When a sample document is presented as the query, a *tf·idf* type of weighting may be applied to the query as well. From the computed weights for the terms in a document is formed a query vector. The query vector is compared to each document vector for a candidate content presentation for the at least one new link and at least one best matching document is selected. The matching of the vectors can be based, for instance, on dot product or the cosine of the angle between the vectors.

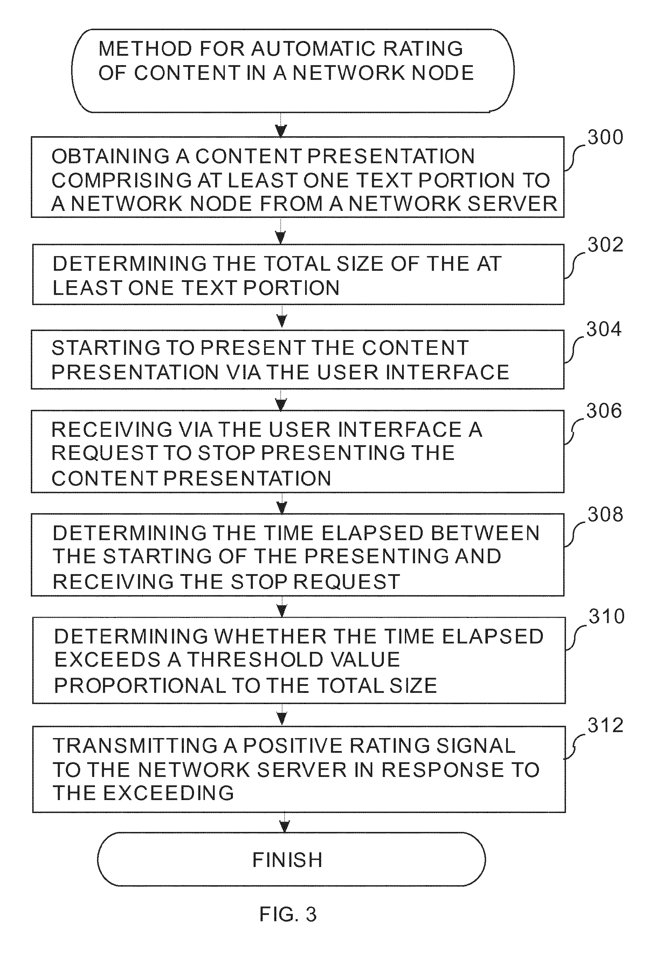

Figure 3 is a flow chart illustrating a method for automatic rating of content in a network node in one embodiment of the invention.

At step 300 a content presentation comprising at least one text portion is obtained to the network node from a network server. The network node may be a wireless network node.

In one embodiment of the invention, the content presentation is obtained to the network node from the network server in response to a request sent by the network node to the network server. The request may comprise an identifier of the content presentation such as a URI or a URL.

In one embodiment of the invention, the content presentation is obtained to the network node from a network server as part of a set of at least one content presentations pushed by the network server to the network node. The pushing comprises the sending of the at least one content presentation to the network node. There may be no solicitation from the network node to the network server for the content presentation explicitly.

In one embodiment of the invention, the content presentation comprises at least one content item. In one embodiment of the invention, a content item may comprise at least one of a structured document, a hypertext document, an image, a video, a document, a text document and an animation.

In one embodiment of the invention, the content presentation comprises at least one of structured document, a hypertext document, an image, a video and an animation. The content presentation may be a hypertext page comprising at least one image.

In one embodiment of the invention, the at least one content item may comprise at least one controlling content item that determines at least one of the structure of the presentation and the timing of the presentation. There may be additional content items among the at least one content item that comprise visual or textual information.

At step 302 the total length of the at least one text portion is determined. The total length is the length of the at least one text portion concatenated together.

In one embodiment of the invention, the total length is determined based on the total number of words in the at least one text portion.

In one embodiment of the invention, the total length is determined based on the total number of characters in the at least one text portion.

In one embodiment of the invention, the total length is determined based on the total number of bytes of memory consumed by the at least one text portion.

In one embodiment of the invention, the total length is determined based on the total number of paragraphs in the at least one text portion.

At step 304 the presentation of the content presentation is started via a user interface of the network node.

In one embodiment of the invention, the presentation may involve a parsing and processing of a controlling content item that determines at least one of the structure of the presentation and the timing of the presentation and the presenting of at least one content item at a place on the user interface determined by the controlling content item.

At step 306 via the user interface is received a request to stop presenting the content presentation. The request may be an event associated with the user interface indicative of closing a window comprising the content presentation. The user may close the window using a pointer device such as a mouse.

At step 308 the time elapsed between the starting of the presentation of the content presentation and the request to stop presenting the content presentation is determined. The determination may be performed in the network node.

In one embodiment of the invention, the starting time may be determined to be the time when the content presentation has been completely downloaded to the network node, if the presentation is started when all of the content presentation has not yet downloaded to the network node.

In one embodiment of the invention, the starting time may be determined to be the time when the at least one text portion has been completely downloaded to the network node.

At step 310 the network node determines whether the time elapsed exceeds a threshold value proportional to the total length of the at least one text portion.

The threshold value may be proportional to the total number of at least one of sentences, words, characters, bytes, bits and paragraphs in the at least one text portion.

At step 312 the network node sends a positive rating signal associated with the content presentation in response to the exceeding of the threshold value.

The positive rating signal may comprise an identifier of the content presentation.

In one embodiment of the invention, the content presentation may be presented in a browser function. The browser function may be part of the user interface.

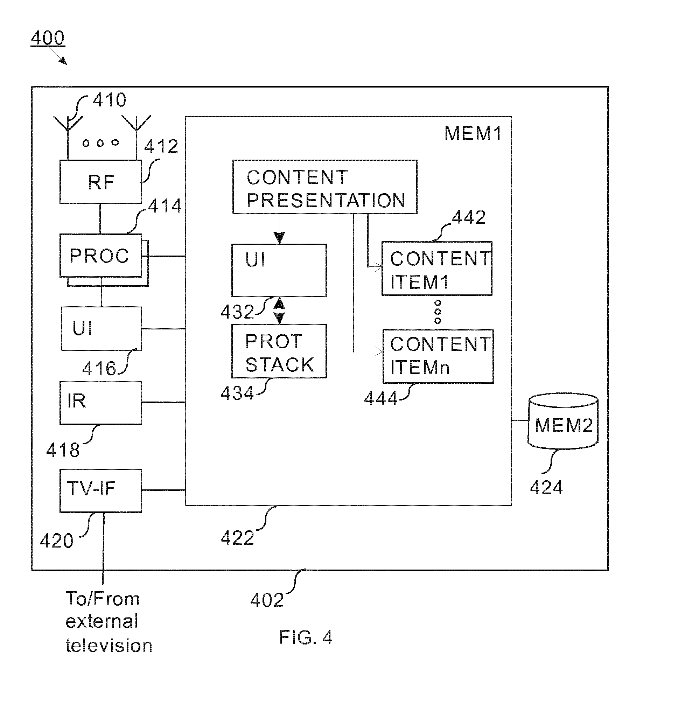

Figure 4 is a block diagram illustrating an apparatus in one embodiment of the invention. In Figure 4 there is an apparatus 400, which is, for example, a mobile node, user equipment, a handset, a cellular phone, a mobile terminal, an Application Specific Integrated Circuit (ASIC), a chip or a chipset. Apparatus 400 may correspond to a network node illustrated in Figure 1 and a network node described in association with Figure 3. The internal functions of apparatus 400 are illustrated with a box 402. Apparatus 400 may comprise at least one antenna 410. There may be multiple input and output antennas. In association with apparatus 400 there is at least one Radio Frequency (RF) circuit 412. RF circuit 412 may be also any circuit or may be referred to as circuit 412 or circuitry 412. RF circuit 412 may also comprise a baseband circuit (not shown). RF circuit 412 is communicatively connected to at least one processor 414. Connected to processor 414 there may be a first memory 422, which is, for example, a Random Access Memory (RAM). There may also be a second memory 422, which may be a non-volatile memory, for example, an optical or magnetic disk or a flash memory. There may also be a local User Interface (UI) 416 and an interface to an external display 420. There is also an infrared receiver 418 for receiving commands from a remote controller. In memory 420 there may be stored software relating to functional entities 432 - 436. A protocol stack entity 432 communicates with RF circuit 412 to signaling and user data transmission and reception. Protocol stack entity 432 may comprise, for example, an internet protocol stack.

A user interface entity 434 performs content presentation rendering on a user interface presented via interface 420 to external display. User interface entity 434 receives content items via protocol stack 432 or obtains content presentations from memory 422 such as a content presentation 440, from which there are local links to content items 442 and 444. User interface entity 434 may parse controlling content items such as hypertext documents. It may also issue requests to protocol entity 432 to retrieve content items for which there are links within a content item being rendered via interface 420 on the external display. User interface entity 434 is also configured to determine the time elapsed between the rendering of a content presentation on the user interface and a request from the user to close the content presentation. User interface entity 434 is also configured to determine the total length of text portions in the content presentation. By the total length is meant the length of the text portions of the content presentation concatenated.

RF circuit 412 may comprise a transmitter for SC- FDMA and a receiver or a transmitter for OFDMA. RF circuit 412 may also comprise a transmitter and a receiver circuit for WLAN transmission or reception. As used in this application, the term 'circuitry' and 'circuit' refers to all of the following: (a) hardware- only circuit implementations (such as implementations in only analog and/or digital circuitry) and (b) to combinations of circuits and software (and/or firmware), such as (as applicable) : (i) to a combination of processor (s) or (ii) to portions of processor (s) / software (including digital signal processor (s) ), software, and memory (ies) that work together to cause an apparatus, such as a mobile phone or server, to perform various functions) and (c) to circuits, such as a microprocessor (s) or a portion of a microprocessor (s), that require software or firmware for operation, even if the software or firmware is not physically present. This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device

When the at least one processor 414 executes functional entities associated with the invention, memory 422 comprises entities such as, any of the functional entities 432 and 434. The functional entities within apparatus 400 illustrated in Figure 4 may be implemented in a variety of ways. They may be implemented as processes executed under the native operating system of the network node. The entities may be implemented as separate processes or threads or so that a number of different entities are implemented by means of one process or thread. A process or a thread may be the instance of a program block comprising a number of routines, that is, for example, procedures and functions. The functional entities may be implemented as separate computer programs or as a single computer program comprising several routines or functions implementing the entities. The program blocks are stored on at least one computer readable medium such as, for example, a memory circuit, memory card, magnetic or optical disk. Some functional entities may be implemented as program modules linked to another functional entity. The functional entities in Figure 4 may also be stored in separate memories and executed by separate processors, which communicate, for example, via a message bus or an internal network within the network node. An example of such a message bus is the Peripheral Component Interconnect (PCI) bus.

The embodiments of the invention described hereinbefore in association with the summary of the invention, Figures 1, 2, 3 and 4 may be used in any combination with each other. Several of the embodiments may be combined together to form a further embodiment of the invention.

The exemplary embodiments of the invention can be included within any suitable device, for example, including any suitable servers, workstations, PCs, laptop computers, PDAs, Internet appliances, handheld devices, cellular telephones, wireless devices, other devices, and the like, capable of performing the processes of the exemplary embodiments, and which can communicate via one or more interface mechanisms, including, for example, Internet access, telecommunications in any suitable form (for instance, voice, modem, and the like), wireless communications media, one or more wireless communications networks, cellular communications networks, 3G communications networks, 4G communications networks Public Switched Telephone Network (PSTNs), Packet Data Networks (PDNs), the Internet, intranets, a combination thereof, and the like.

It is to be understood that the exemplary embodiments are for exemplary purposes, as many variations of the specific hardware used to implement the exemplary embodiments are possible, as will be appreciated by those skilled in the hardware art(s). For example, the functionality of one or more of the components of the exemplary embodiments can be implemented via one or more hardware devices, or one or more software entities such as modules.

The exemplary embodiments can store information relating to various processes described herein. This information can be stored in one or more memories, such as a hard disk, optical disk, magneto-optical disk, RAM, and the like. One or more databases can store the information regarding cyclic prefixes used and the delay spreads measured. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be implemented by the preparation of one or more application-specific integrated circuits or by interconnecting an appropriate network of conventional component circuits, as will be appreciated by those skilled in the electrical art(s).

As stated above, the components of the exemplary embodiments can include computer readable medium or memories according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Transmission media can include coaxial cables, copper wire, fiber optics, and the like. Transmission media also can take the form of acoustic, optical, electromagnetic waves, and the like, such as those generated during radio frequency (RF) communications, infrared (IR) data communications, and the like. Common forms of computer-readable media can include, for example, a floppy disk, a flexible disk, hard disk, magnetic tape, any other suitable magnetic medium, a CD-ROM, CDRW, DVD, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

While the present inventions have been described in connection with a number of exemplary embodiments, and implementations, the present inventions are not so limited, but rather cover various modifications, and equivalent arrangements, which fall within the purview of prospective claims.

The embodiments of the invention described hereinbefore in association with the figures presented and the summary of the invention may be used in any combination with each other. Several of the embodiments may be combined together to form a further embodiment of the invention.

It is obvious to a person skilled in the art that with the advancement of technology, the basic idea of the invention may be implemented in various ways. The invention and its embodiments are thus not limited to the examples described above; instead they may vary within the scope of the claims.

**Claims**

1. A method, comprising:

    obtaining at a network node a first content presentation comprising at least one text portion from a network server;
    summing the length of the at least one text portion to yield a total length of the at least one text portion;
    starting presenting of the first content presentation on a user interface of the network node;
    detecting via the user interface a request to stop the presenting of the first content presentation;
    determining the time elapsed between the starting of the presenting and the detecting of the request to stop the presenting;
    determining whether the time elapsed exceeds a threshold value proportional to the calculated total length of the at least one text portion; and
    transmitting, from the network node, a positive relevancy rating signal associated with an identifier of the first content presentation in response to the exceeding of the threshold value to the network server.

2. The method according to claim 1, wherein the length of the at least one text portion and the total length are determined in terms of at least one of the number of words, the number of sentences, the number of characters, the number of bytes and the number of paragraphs.

3. The method according to claim 1 or 2, the method further comprising:

    storing, in the network server, a content presentation database;
    storing the first content presentation in the content presentation database;
    receiving from the network node a request for at least two content presentations; and
    transmitting the first content presentation to the network node in response to the request.

4. The method according to claim 3, the method further comprising:

    receiving the first content presentation to the network server from a content owner node.

5. The method according to any of the claims 1 - 4, the method further comprising:

    transmitting, from the network node, a request comprising an identifier of the first content presentation to the network server.

6. The method according to any of the preceding claims 1 - 5, the method further comprising:

    reserving on the user interface an area for at least two visual symbols, each symbol being representative of a linked content presentation; and
    presenting a visual symbol representative of the first content presentation in the area; and
    detecting a selection of the visual symbol representative of the first content presentation via the user interface of the network node.

7. The method according to any of the claims 3 - 6, the method further comprising:

    storing a second content presentation in the content presentation database;
    in response to the receiving of the positive relevancy rating signal, determining in the content presentation database that the second content presentation has a document similarity metric best matching the first content presentation, the document similarity metric being computed for the at least one text portion of the first content presentation and the at least one text portion of the second content presentation; and
    transmitting the second content presentation to the network node.

8. The method according to claim 6, the method further comprising:

    receiving a second content presentation at the network node; and
    presenting a visual symbol representative of the second content presentation in the area.

9. The method according to claim 6, wherein the document similarity metric is computed using the vector space model for text documents.

10. The method according to any of the claims 3 - 9, the method further comprising:

   receiving a predefined number of negative relevancy rating signals associated with the first content presentation to the network server; and
   removing the first content presentation from the content presentation database.

11. The method according to any of the claims 1 - 10, wherein the first content presentation or the second content presentation comprises at least one of a text document content item, a hypertext content item, a picture content item, a computer graphics animation content item and a video content item.

12. The method according to any of the claims 1 - 11, wherein the identifier of the first content presentation comprises at least one of a uniform resource locator, a uniform resource identifier or an object identifier.

13. The method according to any of the claims 1 - 12, wherein the network node comprises a wireless network node.

14. The method according to any of the claims 1 - 13, wherein the network node is communicatively connected to a television to present the user interface of the network node.

15. An apparatus comprising at least one processor and at least one memory including computer program code, the at least one memory and the computer program code configured to, with the at least one processor, cause the apparatus at least to perform:

   obtaining at the apparatus a first content presentation comprising at least one text portion from a network server;
   summing the length of the at least one text portion to calculate a total length of the at least one text portion;
   starting presenting of the first content presentation on a user interface of the apparatus;
   detecting via the user interface a request to stop the presenting of the first content presentation;
   determining the time elapsed between the starting of the presenting and the detecting of the request to stop the presenting;
   determining whether the time elapsed exceeds a threshold value proportional to the calculated total length of the at least one text portion; and
   transmitting, from the apparatus, a positive relevancy rating signal associated with an identifier of the first content presentation in response to the exceeding of the threshold value to the network server.

16. A computer program comprising code adapted to cause the following when executed on a data-processing system:

   obtaining at a network node a first content presentation comprising at least one text portion from a network server;
   summing the length of the at least one text portion to calculate a total length of the at least one text portion;
   starting presenting of the first content presentation on a user interface of the network node;
   detecting via the user interface a request to stop the presenting of the first content presentation;
   determining the time elapsed between the starting of the presenting and the detecting of the request to stop the presenting;
   determining whether the time elapsed exceeds a threshold value proportional to the calculated total length of the at least one text portion; and
   transmitting, from the network node, a positive relevancy rating signal associated with an identifier of the first content presentation in response to the exceeding of the threshold value to the network server.

FIG. 1

FIG. 2

METHOD FOR AUTOMATIC RATING OF CONTENT IN A NETWORK NODE

OBTAINING A CONTENT PRESENTATION COMPRISING AT LEAST ONE TEXT PORTION TO A NETWORK NODE FROM A NETWORK SERVER
⌐ 300

DETERMINING THE TOTAL SIZE OF THE AT LEAST ONE TEXT PORTION
⌐ 302

STARTING TO PRESENT THE CONTENT PRESENTATION VIA THE USER INTERFACE
⌐ 304

RECEIVING VIA THE USER INTERFACE A REQUEST TO STOP PRESENTING THE CONTENT PRESENTATION
⌐ 306

DETERMINING THE TIME ELAPSED BETWEEN THE STARTING OF THE PRESENTING AND RECEIVING THE STOP REQUEST
⌐ 308

DETERMINING WHETHER THE TIME ELAPSED EXCEEDS A THRESHOLD VALUE PROPORTIONAL TO THE TOTAL SIZE
⌐ 310

TRANSMITTING A POSITIVE RATING SIGNAL TO THE NETWORK SERVER IN RESPONSE TO THE EXCEEDING
⌐ 312

FINISH

FIG. 3

400

FIG. 4

Europäisches
Patentamt

European
Patent Office

Office européen
des brevets

## EUROPEAN SEARCH REPORT

Application Number

EP 12 16 5697

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/157714 A1 (STANTON AARON [US] ET AL) 18 June 2009 (2009-06-18) * paragraphs [0033], [0036], [0037], [0094], [0095], [0109], [0110] * ----- | 1-16 | INV. H04L29/08 |
| Y | US 2009/119258 A1 (PETTY WILLIAM [US]) 7 May 2009 (2009-05-07) * paragraph [0119] - paragraph [0120] * ----- | 1-16 | |
| A | WO 01/80087 A1 (RIGHTNOW TECH INC [US]) 25 October 2001 (2001-10-25) * paragraph [0046] * ----- | 1-16 | |

TECHNICAL FIELDS
SEARCHED        (IPC)

H04L
G06F
H04N

The present search report has been drawn up for all claims

| Place of search | Date of completion of the search | Examiner |
|---|---|---|
| Munich | 19 June 2012 | Pandolfi, Alessandra |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 16 5697

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2012

| Patent document cited in search report | | | Publication date | Patent family member(s) | | | Publication date |
|---|---|---|---|---|---|---|---|
| US 2009157714 | A1 | | 18-06-2009 | US | 2009157714 | A1 | 18-06-2009 |
| | | | | WO | 2009079617 | A1 | 25-06-2009 |
| US 2009119258 | A1 | | 07-05-2009 | NONE | | | |
| WO 0180087 | A1 | | 25-10-2001 | AU | 5536301 | A | 30-10-2001 |
| | | | | GB | 2377300 | A | 08-01-2003 |
| | | | | US | 6434550 | B1 | 13-08-2002 |
| | | | | WO | 0180087 | A1 | 25-10-2001 |